# EUROPEAN PATENT APPLICATION

(11) **EP 2 947 740 A1**
(43) Date of publication of application: **25.11.2015**
(21) Application number: 14740841.3
(22) Date of filing: 14.01.2014
(51) Int. Cl.: H02J 3/32, F03D 9/02, H02J 3/38, H02J 7/35

(54) **CONTROL APPARATUS, METHOD, AND PROGRAM, AND NATURAL ENERGY GENERATION APPARATUS PROVIDED WITH CONTROL APPARATUS, METHOD, AND PROGRAM**

(30) Priority: 21.01.2013 JP 2013008806
(71) Applicant: Mitsubishi Heavy Industries, Ltd., Tokyo 108-8215 (JP)
(72) Inventor: MURATA, Hiroki, Tokyo 108-8215 (JP); YASUGI, Akira, Tokyo 108-8215 (JP); KOBAYASHI, Yu, Tokyo 108-8215 (JP)
(74) Representative: Hoffmann Eitle
(86) International application number: PCT/JP2014/050399
(87) International publication number: WO 2014/112454

(57) **Abstract**

A secondary cell is caused to operate efficiently in response to the weather. A control apparatus (10) for controlling the charging and discharging of a secondary cell (20) connected to an electrical generation device for generating electricity using natural energy, wherein the apparatus is equipped with: a control unit (13) for controlling the charging and discharging of the secondary cell (20) so that a target charging rate, which is the target charging rate for the secondary cell (20), is maintained; an estimation unit (11) for estimating the amount of electric power generated using the electrical generation device after a prescribed amount of time has elapsed, on the basis of weather predictions affecting the amount of electric power of the electrical generation device; and a charging rate change unit (12) for changing the target charging rate when the difference between the amount of electric power generated after a prescribed amount of time has elapsed estimated by the estimation unit (11), and the current amount of electric power of the electrical generation device, is determined to be larger than a prescribed value.

## Description

### Technical Field

The present invention relates to a control apparatus, a method, and a program, and a natural energy generation apparatus such as a wind power generation device or a solar power generation device provided with the control apparatus, the method, and the program.

### Background Art

In the related art, in an electrical generation device which generates electricity by natural energy such as solar power generation and wind power generation, since whether charging or discharging is performed in the next moment is dependent on a weather change, a secondary cell is connected to the electrical generation device, and by controlling to maintain a State Of Charge (hereinafter, referred to as "SOC") of the secondary cell to a prescribed value (for example, 50%), output power is averaged to cope with request of the charging and discharging generated by the weather change of the natural energy.

In addition, PTL 1 below discloses a technology, in which distribution of errors in output power for each prediction value is calculated on the basis of the output power output in the past and a prediction value of the output power preset in the past, power flowing from an electrical generation device into a system is coincident with a notification value using a target value of the output power set on the basis of the distribution of errors, and the output power is averaged.

### Citation List

### Patent Literature

[PTL 1] Japanese Unexamined Patent Application Publication No. 2008-54385

### Summary of Invention

### Technical Problem

However, for example, since a large amount of charge is expected when it is predicted that clear weather is continuous for a long time, an inclination to either charging or discharging is performed according to weather. In this way, if the maintaining and controlling of the SOC is operated the when there is the inclination to the charging or the discharging, the charging is limited even when electricity can be charged so as to be equal to or more than the maintained and controlled prescribed value, and as a result, the SOC is controlled to be decreased, and there is a problem that the operation cannot be effectively performed.

Meanwhile, the method of PTL 1 only discloses that the target value is set so that errors of the prediction value of the output power are decreased and the prediction value is coincident with the notification value, and a control corresponding to the change of the charging and discharging from the present to the future is not performed, and thus it is not possible to effectively perform the operation.

The present invention is made in consideration of the above-described circumstances, and an object thereof is to provide a control apparatus, a control method, and a program capable of effectively operating and controlling a secondary cell according to the weather, and a natural energy generation apparatus provided with the control apparatus, the control method, and the program.

### Solution to Problem

In order to achieve the above-described object, the present invention adopts the following means.

According to a first aspect of the present invention, there is provided a control apparatus for controlling charging and discharging of a secondary cell connected to an electric generation device for generating electricity using natural energy, including: control means for controlling the charging and discharging of the secondary cell so that a target charging rate which is the target charging rate for the secondary cell is maintained; estimation means for estimating an amount of electric power generated by the electric generation device after a prescribed amount of time has elapsed, on the basis of weather predictions affecting an amount of power generation of the electric generation device; and charging rate change means for changing the target charging rate when a difference between the amount of electric power estimated by the estimation means after a prescribed amount of time has elapsed, and a current amount of electric power of the electric generation device is determined to be larger than a prescribed value.

According to this configuration, in the control apparatus for controlling charging and discharging of the secondary cell connected to the electric generation device for generating electricity using natural energy, when the difference between the amount of electric power which is estimated on the basis of weather predictions and is generated by the electric generation device after the prescribed amount of time has elapsed, and the current amount of electric power is determined to be less than or equal to the prescribed value, the set target charging rate is controlled so as to be maintained, and the difference between the amount of electric power after the prescribed amount of time has elapsed and the current amount of electric power is determined to be larger than the prescribed value, the changed target charging rate is controlled to be maintained.

Accordingly, compared to a case where the target charging rate is operated to be fixed even when the charging amount is changed according to the change of the weather, it is possible to effectively control the charging and discharging according to the estimated amount of electric power.

In addition, the effect with respect to the amount of power generation is an increase and a decrease of the amount of power generation, and for example, when the weather is clear, the amount of power generation is increased, and when the weather is cloudy or rain, the amount of power generation is decreased.

In the first aspect, preferably, the charging rate change means of the control apparatus changes the target charging rate in a section between an effective change upper limit which is lower than a charge upper limit which is a charging rate lower than a full charge state, and an effective change lower limit which is higher than a discharge lower limit which is a charging rate higher than a discharging start and end state.

In this way, since a section in which the target charging rate is changed is provided in the section between the charge upper limit and the discharge lower limit, it is possible to operate the secondary cell without having a concern of the target charging rate reaching the charge upper limit or the discharge lower limit even when the target charging rate is changed.

In the first aspect, preferably, when the amount of electric power after the prescribed amount of time has elapsed is larger than the current amount of the electric power of the electric generation device by the prescribed value, the charging rate change means of the control apparatus increases the changed target charging rate within a range of a value less than or equal to the effective change upper limit.

Accordingly, when it is estimated that a large amount of charge can be expected according to the weather, it is possible to provide the charging in which the target charging rate is increased.

In the first aspect, preferably, when the amount of electric power after the prescribed amount of time has elapsed is smaller than the current amount of the electric power of the electric generation device by the prescribed value, the charging rate change means of the control apparatus increases the changed target charging rate within a range of the value less than or equal to the effective change upper limit, and thereafter, when the current amount of the electric power of the electric generation device is smaller than a threshold value, the charging rate change means decreases the changed target charging rate within a range of a value equal to or more than the effective change lower limit.

Accordingly, when it is estimated that the amount of electric power generated by the electrical generation device according to weather is decreased by the prescribed value, since the discharging of the secondary cell is necessary, charging is additionally performed in advance in preparation for the discharging by temporarily increasing the target charging rate. Thereafter, when the current amount of electric power is smaller than the threshold value, by decreasing the target charging rate within the range of the value equal to or more than the effective change lower limit, compared to the case where the target charging rate is operated so as to be fixed, the discharging is easily performed. In this way, when the control is performed so as to be discharged, by temporarily increasing the target charging rate and thereafter, decreasing the target charging rate, it is possible to effectively operate the secondary cell.

In the first aspect, preferably, the target charging rate set without using the weather predictions is set as a standard target charging rate, and when a capacity of the electrical generation device is less than or equal to a lower limit of a rated capacity, the charging rate change means sets the target charging rate to the standard target charging rate.

Accordingly, when the capacity of the electric generation device is less than or equal to the lower limit of the rated capacity of the electric generation device, the target charging rate securely returns to the original target charging rate (standard target charging rate) in which weather is not considered.

According to a second aspect of the present invention, there is provided a wind power generation system, including: the above-described control apparatus; and a secondary cell which is connected to an electrical generation device for generating electricity by natural energy, in which the electrical generation device is a wind power generation device.

According to a third aspect of the present invention, there is provided a solar power generation system, including: the above-described control apparatus; and a secondary cell which is connected to an electrical generation device for generating electricity by natural energy, in which the electrical generation device is a solar power generation device.

According to a fourth aspect of the present invention, there is provided a control method for controlling charging and discharging of a secondary cell connected to an electric generation device for generating electricity using natural energy, including: a control step of controlling the charging and discharging of the secondary cell so that a target charging rate which is the target charging rate for the secondary cell is maintained; an estimation step of estimating an amount of electric power generated by the electric generation device after a prescribed amount of time has elapsed, on the basis of weather predictions affecting an amount of power generation of the electric generation device; and a charging rate change step of changing the target charging rate when a difference between the amount of electric power after a prescribed amount of time has elapsed, and a current amount of electric power of the electric generation device is determined to be larger than a prescribed value.

According to a fifth aspect of the present invention, there is provided a control program for controlling charging and discharging of a secondary cell connected to an electric generation device for generating electricity using natural energy, and causing a computer to execute the following processing, in which the processes include: control processing of controlling the charging and discharging of the secondary cell so that a target charging rate which is the target charging rate for the secondary cell is maintained; estimation processing of estimating an amount of electric power generated by the electric generation device after a prescribed amount of time has elapsed, on the basis of weather predictions affecting an amount of power generation of the electric generation device; and charging rate change processing of changing the target charging rate when a difference between the amount of electric power after a prescribed amount of time has elapsed, and a current amount of electric power of the electric generation device is determined to be larger than a prescribed value.

### Advantageous Effects of Invention

According to the present invention, effects effectively operating and controlling a secondary cell according to weather can be obtained.

### Brief Description of Drawings

Fig. 1 is a diagram showing a schematic configuration of a wind power generation system according to the present invention.
Fig. 2 is a functional block diagram of a control unit according to the present invention.
Fig. 3 is a diagram for explaining an effective change width.
Fig. 4 is an operation flowchart of the wind power generation system according to the present invention.

### Description of Embodiments

Hereinafter, embodiments with respect to a control apparatus, a control method, and a program according to the present invention, and a natural energy generation apparatus will be described with reference to the drawings.

In the present embodiment, a case in which the control apparatus according the present invention is applied to a wind power generation device will be described as an example. However, the present invention is not limited to this.

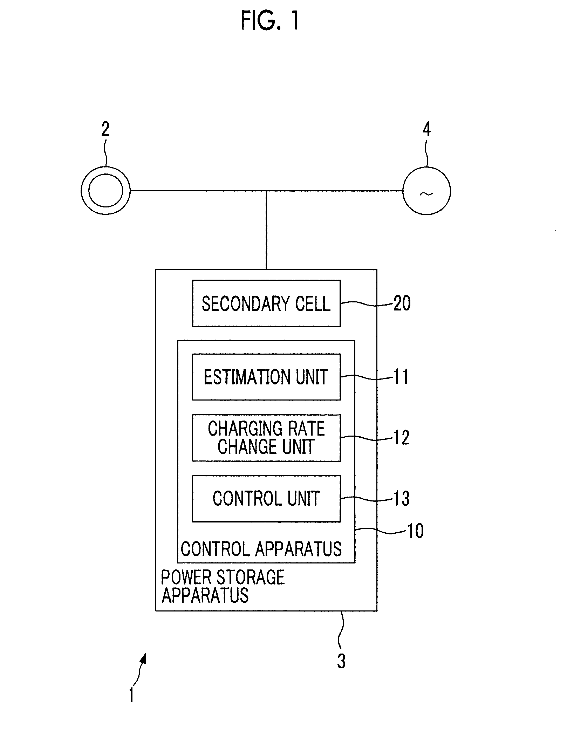

Fig. 1 is a block diagram showing a schematic configuration of a wind power generation system 1 according to the present embodiment. As shown in Fig. 1, the wind power generation system 1 according to the present embodiment includes a wind power generation device (electrical generation device) 2 and a power storage apparatus 3, and is connected to a power system 4.

The wind power generation device 2 is an example of an electrical generation device in which output is changed according to a natural circumstance, and is an electrical generation device which generates electricity by wind power. For simplification, a case in which one wind power generation device 2 is provided is described as an example in Fig. 1. However, the number of the wind power generation devices 2 managed by the power storage apparatus 3 is not particularly limited.

The power storage apparatus 3 includes a control apparatus 10 and a secondary cell 20.

The secondary cell 20 includes a lithium secondary cell, a lead secondary cell, and a nickel hydrogen secondary cell, or the like, and is not particularly limited. However, from the viewpoint of improved follow-up performance of charging and discharging, preferably, the lithium secondary cell is adopted.

For example, the control apparatus 10 includes a Central Processing Unit (CPU) (not shown), a Random Access Memory (RAM), a computer readable recording medium, or the like. A series of processing processes for realizing various functions described below are recorded on a recording medium or the like in the form of a program, the CPU reads the program by the RAM or the like, and by executing processing of information and arithmetic processing, the various functions described below are realized.

Specifically, as shown in Fig. 1, the control apparatus 10 includes an estimation unit (estimation means) 11, a charging rate change unit (charging unit change means) 12, and a control unit (control means) 13.

The estimation unit 11 estimates an amount of electric power generated by the wind power generation device 2 after a prescribed amount of time has elapsed, on the basis of weather predictions affecting an amount of power generation of the electric generation device 2. With respect to a specific estimation method of the amount of electric power, a case of a wind farm in which a plurality of wind power generation devices 2 are provided will be described as an example. The estimation unit 11 predicts the future wind conditions of a wind farm area, in which the plurality of wind power generation devices 2 are installed, after a prescribed amount of time has elapsed (for example, after ten minutes, after one hour, after twenty-four hours, or the like), on the basis of information of weather predictions acquired from outside. In addition, the estimation unit 11 develops the predicted wind conditions for each location, at which the wind power generation device 2 is installed, using wind condition analysis software (for example, MASCOT) or the like, and calculates an output amount of electric power after a prescribed amount of time has elapsed from a predicted wind speed at the installation location of each wind power generation device 2. The estimation unit 11 sets an integrated value of the output power of each wind power generation device calculated as described above to the amount of electric power after the prescribed amount of time has elapsed.

The charging rate change unit 12 changes a target charging rate when a difference between the amount of electric power estimated by the estimation unit 11 after a prescribed amount of time has elapsed, and a current amount of electric power of the wind power generation device 2 is determined to be larger than a prescribed value. Specifically, the charging rate change unit 12 changes the target charging rate in a section between an effective change upper limit which is lower than a charge upper limit which is a charging rate lower than a full charge state, and an effective change lower limit which is higher than a discharge lower limit which is a charging rate higher than a discharging start and end state. In this way, since the section in which the target charging rate is changed is provided in the section between the charge upper limit and the discharge lower limit, it is possible to operate the secondary cell without having a concern of the target charging rate reaching the charge upper limit or the discharge lower limit even when the target charging rate is changed.

In addition, the charging rate change unit 12 does not change the target charging rate and adopts the existing target charging rate when the difference between the amount of electric power estimated by the estimation unit 11 after the prescribed amount of time has elapsed, and the current amount of electric power of the wind power generation device 2 is determined to be less than or equal to the prescribed value.

More specifically, when the amount of electric power after the prescribed amount of time has elapsed is larger than the current amount of the electric power of the wind power generation device 2 by the prescribed value, the charging rate change unit 12 increases the changed target charging rate within a range of a value less than or equal to the effective change upper limit. In addition, when the amount of electric power after the prescribed amount of time has elapsed is smaller than the current amount of the electric power of the wind power generation device 2 by the prescribed value, the charging rate change unit 12 increases the changed target charging rate within a range of the value less than or equal to the effective change upper limit, and thereafter, when the current amount of the electric power of the wind power generation device 2 is smaller than a threshold value, the charging rate change unit 12 decreases the changed target charging rate within a range of a value equal to or more than the effective change lower limit. In addition, preferably, the threshold value is set to a threshold value which calculates an average amount of electric power required for natural energy output smoothing at a system installation location by simulation, and uses the calculated average amount of electric power.

In addition, in the present embodiment, it is described that the charging rate change unit 12 changing the target charging rate so as to be decreased is applied to the case where the current amount of electric power of the wind power generation device 2 is smaller than the threshold value. However, the present invention is not limited to this, for example, even after the amount electric power after the prescribed amount of time has elapsed is detected so as to be smaller than the current amount of electric power of the wind power generation device 2 by the prescribed value, when the state where the amount of electric power after the prescribed amount of time has elapsed is smaller than the current amount of electric power of the wind power generation device 2 by the prescribed value is continuously detected, the charging rate change unit 12 may decrease the target charging rate. Moreover, for example, timing at which the target charging rate is decreased is the timing at which the amount of electric power after the prescribed amount of time has elapsed and the current amount of electric power are compared to each other, and is the timing at which the control apparatus updates the amount of electric power.

In addition, the charging rate change unit 12 sets the target charging rate set without using the weather predictions to a standard target charging rate, and when a capacity of the wind power generation device 2 is less than or equal to a lower limit of a rated capacity, the charging rate change unit 12 sets the target charging rate to the standard target charging rate.

Accordingly, when the capacity of the wind power generation device 2 is less than or equal to the lower limit of the rated capacity of the wind power generation device 2, the target charging rate can be securely returned to the original target charging rate (standard target charging rate) in which weather is not considered.

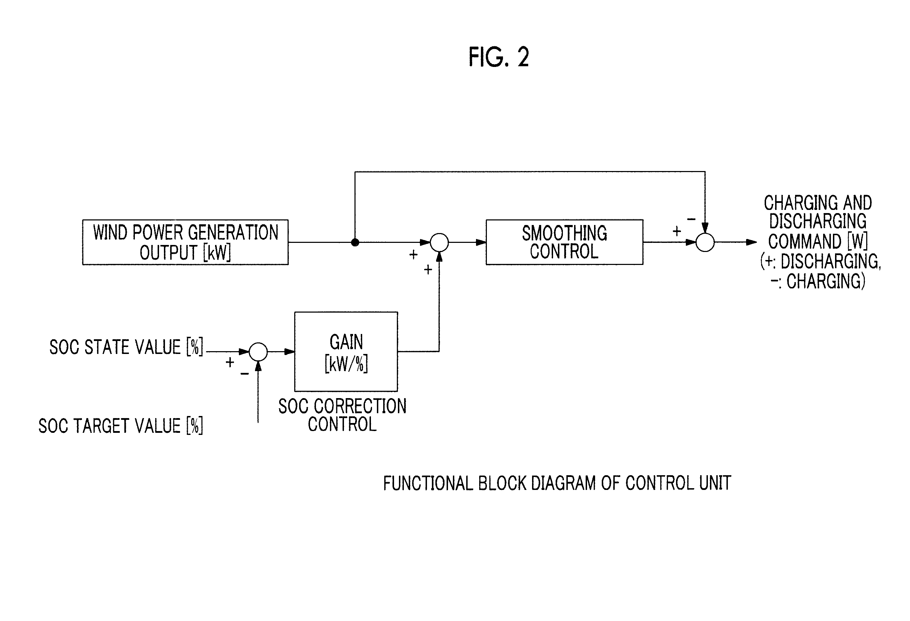

The control unit 13 controls the charging and discharging of the secondary cell 20 so that the target charging rate which is the target charging rate of the secondary cell 20 is maintained. Fig. 2 is a functional block diagram of the control unit 13.

As shown in Fig. 2, the control unit 13 multiplies a difference between a SOC current state value [%] which is the current charging rate SOC and the changed target charging rate (SOC target value) determined by the charging rate change unit 12 or the existing target charging rate (SOC target value) by a gain [kW/%], and performs a correction control of the charging rate SOC. In addition, a charging and discharging command [W] is calculated as the control amount, in which the output power of the wind power generation device 2 is subtracted from a power value in which the output power [kW] from the wind power generation device 2 and the correction control amount of the charging rate SOC are added and are smoothed, and if the value is positive (+), the discharging is performed, and if the value is negative (-), the charging is performed.

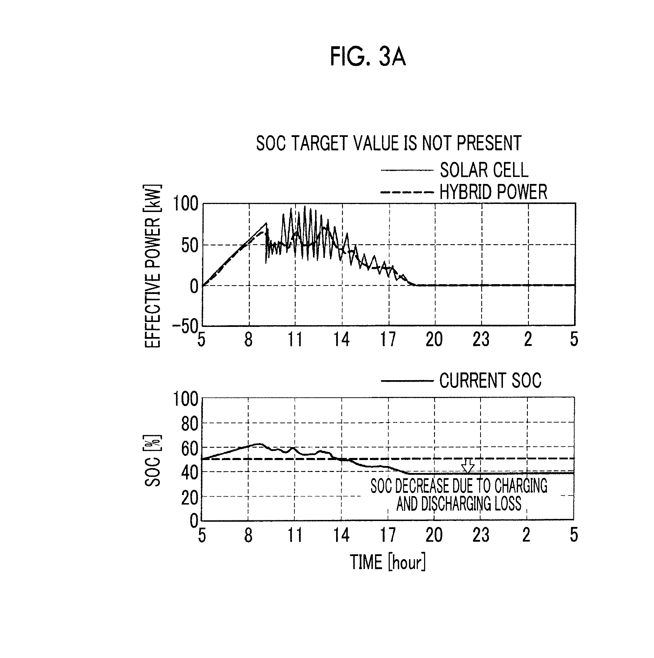

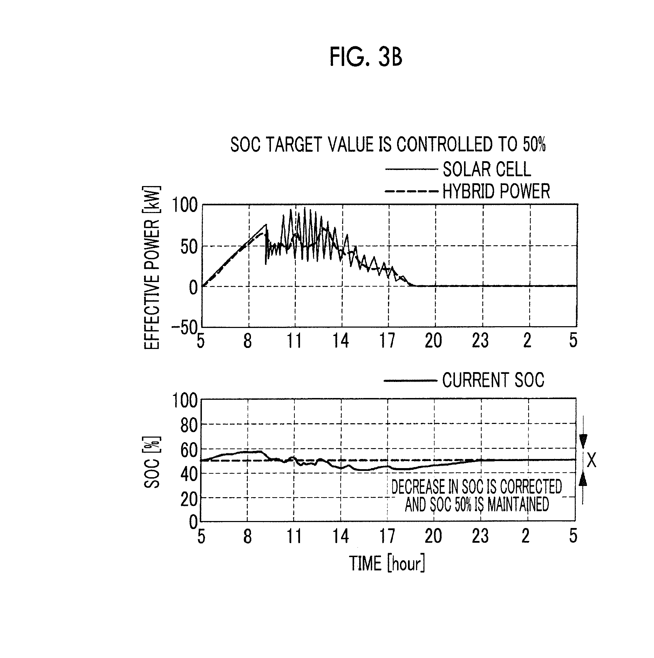

Here, a setting method of the effective change width, in which the section from the effective change upper limit to the effective change lower limit is set to the effective change width, will be described with reference to Fig. 3. In addition, in the setting of the effective change width, the target charging rate is determined so as to be fixed (for example, 50[%]).

The wind condition at the installation location of each wind power generation device 2 is predicted on the basis of weather predictions, and transition of effective power of the wind power generation device 2 is calculated on the basis of the wind condition predictions.

Fig. 3(a) shows time-series transition of the effective power of the electrical generation device calculated on the basis of the wind condition predictions without setting the target charging rate (SOC target value), and shows time-series transition of the charging rate SOC corresponding to the time-series transition of the effective power. As shown in Fig. 3(a), the charging rate SOC increases as the effective power of the electrical generation device increases, the charging rate SOC also decreases as the effective power decreases, and the charging rate SOC decreases to less than or equal to 40[%] when the effective power is 0.

Meanwhile, Fig. 3(b) shows a calculation result in which the transition of the charging rate SOC, which is smoothed to set (for example, target value = 50[%]) the target charging rate, is calculated by simulation, according to the time-series transition of the effective power of the electrical generation device calculated on the basis of the wind condition predictions. The transition of the charging rate SOC is obtained when the target charging rate is fixed to 50[%] in the functional block diagram of the control unit 13 in Fig. 2. When the charging rate SOC is controlled to be fixed to 50[%], the power is obtained from the power system 4 side even when the effective power is 0, a decrease in the charging rate Soc is corrected, and thus, 50% is maintained.

As shown in Fig. 3(b), a SOC maximum value (for example, 60[%]) and a SOC minimum value (for example, 40[%]) are read on the basis of the transition of the charging rate SOC obtained as described above, and the section between the read maximum value and the minimum value is determined as the effective change width X. Here, the value in which the upper limit of the charging rate SOC is set to 60[%] and the lower limit is set to 40[%] is not limited and is an example, and may be lower than the charge upper limit which is the charging rate lower than the full charge state and may be higher than the discharge lower limit which is the charging rate higher than the charging end state.

In addition, in the graph showing the effective power, a solid line indicates the power of the solar power generation device, and a dotted line indicates hybrid power of the solar power generation device and the wind power generation device.

Hereinafter, an operation of the control apparatus 10 according to the present embodiment will be described with reference to Figs. 1 to 4.

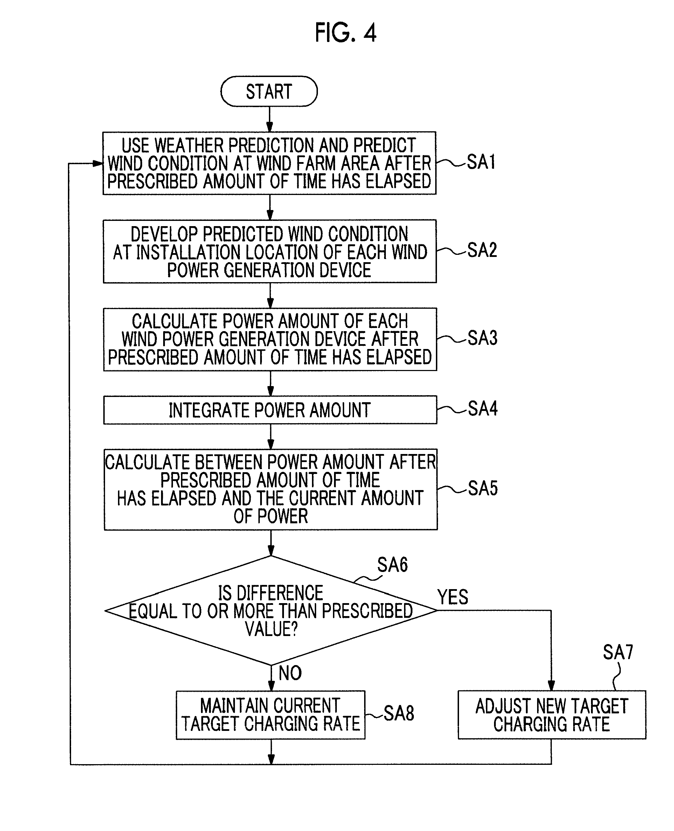

If information of the weather predictions is input to the control apparatus 10, the wind conditions after the prescribed amount of time has elapsed at the wind farm area in which the wind power generation system 1 is provided are predicted on the basis of weather prediction information (Step SA1 in Fig. 4). The predicted wind conditions are developed at the location at which each wind power generation device 2 is provided (Step SA2 in Fig. 4). The output power after the prescribed amount of time has elapsed is calculated from the predicted wind speed at the installation location of each wind power generation device 2 (Step SA3 in Fig. 4). The calculated output power items of the wind power generation devices 2 are integrated, and the integrated value is set to the estimated amount of electric power after the prescribed amount of time has elapsed (Step SA4 in Fig. 4).

The difference between the estimated amount of electric power after the prescribed amount of time has elapsed and the current amount of electric power of the wind power generation system 1 is calculated (Step SA5 in Fig. 4). It is determined whether or not the difference between the amount of electric power after the prescribed amount of time has elapsed and the current amount of electric power of the wind power generation system 1 is larger than the prescribed value (Step SA6 in Fig. 4), and when the difference is larger than the prescribed value, the target charging rate is changed (Step SA7 in Fig. 4) to prepare the charging and discharging after the prescribed amount of time has elapsed. In addition, when the difference is less than or equal to the prescribed value, the current (existing) target charging rate is used without being changed (Step SA8 in Fig. 4).

As described above, according to the control apparatus 10, the control method, and the program according to the present embodiment, and the wind power generation device 2 provided with the control apparatus, the control method, and the program, in the control apparatus 10 for controlling charging and discharging of the secondary cell 20 connected to the wind power generation device 2 for generating electricity using wind power energy, when the difference between the amount of electric power which is estimated on the basis of weather predictions and is generated by the wind power generation device 2 after the prescribed amount of time has elapsed, and the current amount of electric power is determined to be less than or equal to the prescribed value, the set target charging rate is controlled so as to be maintained, and the difference between the amount of electric power after the prescribed amount of time has elapsed and the current amount of electric power is determined to be equal to or more than the prescribed value, the changed target charging rate is controlled so as to be maintained.

Accordingly, compared to a case where the target charging rate is operated to be fixed even when the charging amount is changed according to the change of the weather, it is possible to effectively control the charging and discharging according to the estimated amount of electric power.

Moreover, in the present embodiment, the case where the control apparatus 10 is applied to the wind power generation device 2 is described as an example. However, the present invention is not limited to this, and for example, the control apparatus 10 may be applied to a solar power generation device.

### Reference Signs List

- 1:: WIND POWER GENERATION SYSTEM
- 2:: WIND POWER GENERATION DEVICE
- 3:: POWER STORAGE APPARATUS
- 4:: POWER SYSTEM
- 10:: CONTROL APPARATUS
- 11:: ESTIMATION UNIT (ESTIMATION MEANS)
- 12:: CHARGING RATE CHANGE UNIT (CHARGING RATE CHANGE MEANS)
- 13:: CONTROL UNIT (CONTROL MEANS)
- 20:: SECONDARY CELL

## Claims

1. A control apparatus for controlling charging and discharging of a secondary cell connected to an electric generation device for generating electricity using natural energy, comprising:
control means for controlling the charging and discharging of the secondary cell so that a target charging rate which is the target charging rate for the secondary cell is maintained;
estimation means for estimating an amount of electric power generated by the electric generation device after a prescribed amount of time has elapsed, on the basis of weather predictions affecting an amount of power generation of the electric generation device; and
charging rate change means for changing the target charging rate when a difference between the amount of electric power estimated by the estimation means after a prescribed amount of time has elapsed, and a current amount of electric power of the electric generation device is determined to be larger than a prescribed value.

2. The control apparatus according to claim 1,
wherein the charging rate change means changes the target charging rate in a section between an effective change upper limit which is lower than a charge upper limit which is a charging rate lower than a full charge state, and an effective change lower limit which is higher than a discharge lower limit which is a charging rate higher than a discharging start and end state.

3. The control apparatus according to claim 2,
wherein when the amount of electric power after the prescribed amount of time has elapsed is larger than the current amount of the electric power of the electric generation device by the prescribed value, the charging rate change means increases the changed target charging rate within a range of a value less than or equal to the effective change upper limit.

4. The control apparatus according to claim 2 or 3,
wherein when the amount of electric power after the prescribed amount of time has elapsed is smaller than the current amount of the electric power of the electric generation device by the prescribed value, the charging rate change means increases the changed target charging rate within a range of the value less than or equal to the effective change upper limit, and thereafter, when the current amount of the electric power of the electric generation device is smaller than a threshold value, the charging rate change means decreases the changed target charging rate within a range of a value equal to or more than the effective change lower limit.

5. The control apparatus according to any one of claims 1 to 4,
wherein the target charging rate set without using the weather predictions is set as a standard target charging rate, and when a capacity of the electrical generation device is less than or equal to a lower limit of a rated capacity, the charging rate change means sets the target charging rate to the standard target charging rate.

6. A wind power generation system, comprising:
the control apparatus according to any one of claims 1 to 5; and
a secondary cell which is connected to an electrical generation device for generating electricity by natural energy,
wherein the electrical generation device is a wind power generation device.

7. A solar power generation system, comprising:
the control apparatus according to any one of claims 1 to 5; and
a secondary cell which is connected to an electrical generation device for generating electricity by natural energy,
wherein the electrical generation device is a solar power generation device.

8. A control method for controlling charging and discharging of a secondary cell connected to an electric generation device for generating electricity using natural energy, comprising:
a control step of controlling the charging and discharging of the secondary cell so that a target charging rate which is the target charging rate for the secondary cell is maintained;
an estimation step of estimating an amount of electric power generated by the electric generation device after a prescribed amount of time has elapsed, on the basis of weather predictions affecting an amount of power generation of the electric generation device; and
a charging rate change step of changing the target charging rate when a difference between the amount of electric power after a prescribed amount of time has elapsed, and a current amount of electric power of the electric generation device is determined to be larger than a prescribed value.

9. A control program for controlling charging and discharging of a secondary cell connected to an electric generation device for generating electricity using natural energy, and causing a computer to execute the following processing,
wherein the processing includes:
control processing of controlling the charging and discharging of the secondary cell so that a target charging rate which is the target charging rate for the secondary cell is maintained;
estimation processing of estimating an amount of electric power generated by the electric generation device after a prescribed amount of time has elapsed, on the basis of weather predictions affecting an amount of power generation of the electric generation device; and
charging rate change processing of changing the target charging rate when a difference between the amount of electric power after a prescribed amount of time has elapsed, and a current amount of electric power of the electric generation device is determined to be larger than a prescribed value.
